# EUROPÄISCHE PATENTSCHRIFT

(11) **EP 2 688 509 B1**
(45) Veröffentlichungstag und Bekanntmachung des Hinweises auf die Patenterteilung: **13.09.2017**
(21) Anmeldenummer: 12710859.5
(22) Anmeldetag: 02.02.2012
(51) Int. Cl.: A61C 8/00

(54) **DENTALIMPLANTAT**
DENTAL IMPLANT
IMPLANT DENTAIRE

(30) Priorität: 21.03.2011 DE 102011015298
(43) Veröffentlichungstag der Anmeldung: 29.01.2014
(73) Patentinhaber: ZM Präzisionsdentaltechnik GmbH, 18055 Rostock (DE)
(72) Erfinder: MITROVIC, Milija, 18055 Rostock (DE); ZOTHNER, Aurica, 18055 Rostock (DE)
(74) Vertreter: Marschall, Stefan
(86) Internationale Anmeldenummer: PCT/DE2012/000107
(87) Internationale Veröffentlichungsnummer: WO 2012/126447

(56) Entgegenhaltungen:
- EP-A1- 1 777 206
- WO-A1-96/21628
- WO-A2-2009/063259
- DE-A1- 19 816 865

## Beschreibung

Die Erfindung betrifft ein Verfahren zur Konditionierung zumindest eines Teilbereiches der Oberfläche eines Dentalimplantats aus einem keramischen Material, insbesondere aus Zirkoniumdioxid oder einer seiner Varianten, dessen Außenfläche zur Verankerung im Kieferknochen ausgebildet ist, unter Verwendung einer abrasiven und/oder subtraktiven Bearbeitung, bei dem auf den zu konditionierenden Teilbereich der Oberfläche des Implantates eine dünne Schicht einer silikatischen Glaskeramik aufgetragen wird, die in einem keramischen Brand verfestigt wird und die abschließend abrasiv und/oder subtraktiv bearbeitet und funktionalisiert wird.

Dentalimplantate finden in der zahnärztlichen Therapie Verwendung, um erkrankte oder fehlende Zähne vollständig zu ersetzen. Sie können sowohl im kosmetisch relevanten sichtbaren Vorder- und Seitenzahnbereich eingesetzt werden, zudem können sie als Halteapparat für herausnehmbaren Zahnersatz oder Spezialaufgaben in der Kieferorthopädie usw. dienen. Zur Einpflanzung solcher Dentalimplantate stellt es eine bereits bekannte Maßnahme dar, dessen äußere Oberfläche mit einem Außengewinde zu versehen, das in den Kieferknochen eingeschraubt wird. Da die Implantatverankerung und die Implantatverträglichkeit an der Grenzfläche zwischen dem Implantat und dem angrenzenden Gewebe die Implantatoberfläche eine große Bedeutung hat, hat es sich zudem als vorteilhaft erwiesen, zumindest Teilbereiche der Außenfläche des Implantats derart zu konditionieren, dass das Einwachsen in den Kieferknochen, d. h. die Osseointegration, nachhaltig gefördert wird.

Da der Erfolg und die Geschwindigkeit der Osseointegration maßgeblich von der Oberfläche des Implantats beeinflußt werden, ist es bereits bekannt, die Außenfläche von Dentalimplantaten zu strukturieren. In diesem Zusammenhang hat sich gezeigt, dass Implantate mit glatten oder leicht rauhen Oberflächen eine schlechtere Osseointegration aufweisen als solche mit spezifisch aufgerauhten Oberflächen, in deren Lakunen sich die Osteozyten einlagern können. Andererseits bewirken moderat rauhe Oberflächen im Vergleich zu Implantaten mit sehr rauhen Oberflächen eine bessere Knochenanlagerung. Insgesamt haben Implantate mit solchermaßen strukturierten bzw. konditionierten Oberflächen die Implantate mit glatten, maschinierten Oberflächen weitgehend ersetzt. Zudem können durch eine ideale Implantatoberfläche die biologischen Reaktionen zwischen dem Implantat und dem Knochen optimiert werden und es kann auf diese Weise eine frühzeitigere funktionelle Belastbarkeit des Implantats erreicht werden.

Daher kann neben der Oberflächentopografie die Osseointegration des Implantates auch durch chemische Modifizierungen oder funktionalisierende Beschichtungen der Oberfläche positiv beeinflußt werden. Zur Modifikation der Oberflächentopografie werden subtraktive Verfahren, wie Sandstrahlen, Säureätzen oder eine Kombination von beiden ebenso verwendet wie additive Verfahren, insbesondere Titan-, Plasma- oder Hydroxylapatit-Beschichtungen.

In diesem Zusammenhang ist ein Verfahren der eingangs genannten Art aus der EP 1 777 206 A1 bekannt geworden. Aufgabe der Erfindung ist es, ein derartiges Verfahren so auszubilden, dass es eine optimale und möglichst frühzeitige und zuverlässige Integration von mit diesem Verfahren konditionierten Dentalimplantaten in das umgebende Gewebe gewährleistet, verbunden mit der Möglichkeit einer möglichst frühzeitigen Belastung.

Die Erfindung löst diese Aufgabe dadurch, dass bei diesem Verfahren auf die Oberfläche der so erzeugten Schicht eine Schicht aus Titan aufgetragen wird. Vorteilhafte Weiterbildungen des Verfahrens nach der Erfindung sind in den weiteren Ansprüchen 2 bis 4 angegeben.

Nachfolgend soll die Erfindung anhand von in der Zeichnung dargestellten Ausführungsbeispielen näher erläutert werden. Es zeigen;
- Fig. 1: eine perspektivische Darstellung eines Dentalimplantats und die
- Figuren 2 bis 6: schematische Darstellungen eines vertikalen Schnitts durch die Oberfläche eines Implantats gemäß Fig. 1 in verschiedenen Phasen der Oberflächenkonditionierung.

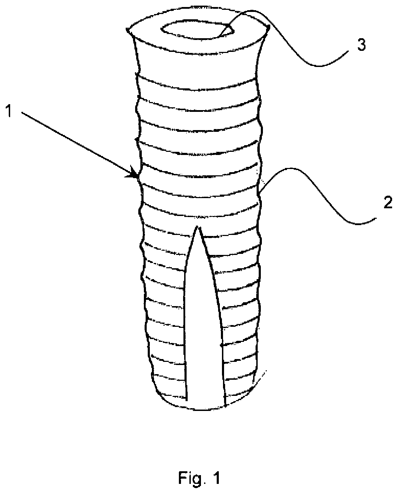

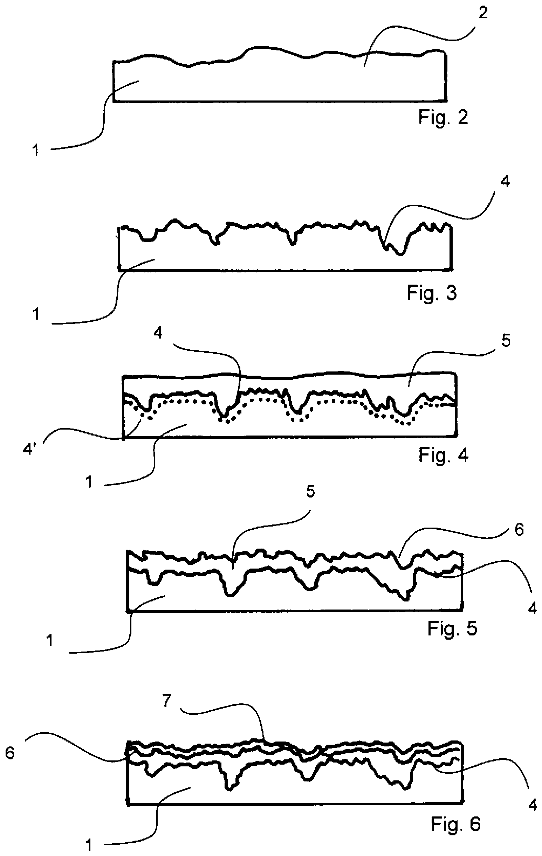

Die Darstellung gemäß Fig. 1 zeigt ein Verankerungselement 1 eines Dentalimplantats in perspektivischer Darstellung mit einer Oberfläche 2 und einer zur Mundhöhle gelegenen Öffnung 3. Letztere dient der Aufnahme eines hier nicht dargestellten Abutments. Das Implantat 1 besteht im Fall des hier dargestellten Ausführungsbeispiels aus einer Keramik auf Zirkonoxidbasis. Zur besseren Integration in den und zur Verankerung im Kieferknochen wird ein Verfahren angewendet, das anhand der in den Figuren 2 bis 6 gezeigten vertikalen Schnitte durch die Oberfläche des Dentalimplantates 1 verschiedenen Phasen der Oberflächenkonditionierung illustriert ist.

Dabei wird auf die in Fig. 2 dargestellte knochenseitige Oberfläche 2 des Dentalimplantates zunächst durch Sandstahlen leicht aufgerauht, so dass die in Fig. 3 dargestellte Struktur mit einer Oberfläche 4 entsteht. Auf diese Oberfläche 4 des Implantates wird 1 eine sehr dünne Schicht 5 eines speziellen silikatischen Glases aufgetragen, im Fall des hier beschriebenen Ausführungsbeispiels geschieht dies durch Sprühen. Diese Schicht 5 wird durch einen keramischen Brand zu einer Diffusionsschicht umgewandelt, die in das Implantat 1 hinein diffundiert, wie dies durch die gepunktet dargestellte Linie 4' in Fig. 4 angedeutet ist. Anschließend erhält die Schicht 5 durch ein abtragendes Verfahren, im Fall des hier beschriebenen Ausführungsbeispiels einer Kombination aus Sandstrahlen und Säureätzen, eine Struktur 6, wie sie in Fig. 5 dargestellt ist. Dadurch, dass bei diesem Verfahren die Dicke der Schicht der solchermaßen strukturierten Oberfläche 4 auf unter 50 *µ*m begrenzt wird, werden die Passeigenschaften in der Knochenkavität nicht behindert.

Da die Beschichtung der Implantatoberfläche mit der Glasmatrix bei einer höheren Temperatur erfolgt als ein etwaiges Verlöten einzelner Komponenten des Implantates miteinander, wird diese Beschichtung in einem ersten Schritt durchgeführt, gefolgt gegebenenfalls vom Zusammenbau und dem Verlöten der einzelnen Komponenten des Implantates. Das Implantat 1 kann anschließend mit einem geeigneten Verfahren in den Kieferknochen eingesetzt werden, wobei die strukturierte Schicht 6 das Besiedeln mit Knochenzellen und in der Folge das Einwachsen des Implantates 1 in das umgebende Gewebe fördert. Durch eine Konditionierung der Implantatoberfläche mit der Schicht auf der Basis eines silikatischen Glases wird zudem körpereigenes Hydroxylapatit (Ca5(OH)(PO4)3) freigesetzt, das diesen Prozess zusätzlich begünstigt.

Um die Rauheit der Oberfläche 6 der Schicht 5 noch zu erhöhen und damit die Festigkeit der Verbindung von Implantat und Kieferknochen weiter zu steigern, kann in das Lot zusätzlich feindispers verteiltes Leuzit (K[AlSi2O6]) mit eingebracht werden.

In einem weiteren, in Fig. 6 dargestellten Schritt, wird abschließend die erzeugte Oberflächenstruktur 6 mit einer dünnen Schicht 7 aus Titan versehen, die beispielsweise mittels einer Plasma-Spraytechnik aufgetragen wird. Auf diese Schicht 7 kann abschließend noch eine Calciumphosphat-Phase aufgebracht werden. Die strukturierte Schicht 7 fördert die Besiedelung mit Knochenzellen und in der Folge das Einwachsen des Implantates 1 in das umgebende Gewebe des Kieferknochens, wobei die aufgebrachte Calciumphosphat-Phase innerhalb kurzer Zeit durch sich neu bildendes knocheneigenes Gewebe ersetzt wird.

## Patentansprüche

1. Verfahren zur Konditionierung zumindest eines Teilbereiches der Oberfläche eines Dentalimplantats aus einem keramischen Material, insbesondere aus Zirkoniumdioxid oder einer seiner Varianten, dessen Außenfläche zur Verankerung im Kieferknochen ausgebildet ist, unter Verwendung einer abrasiven und/oder subtraktiven Bearbeitung, bei dem auf den zu konditionierenden Teilbereich der Oberfläche des Implantates eine dünne Schicht einer silikatischen Glaskeramik aufgetragen wird, die in einem keramischen Brand verfestigt wird, und die abschließend abrasiv und/oder subtraktiv bearbeitet und funktionalisiert wird, **dadurch gekennzeichnet, dass** auf die Oberfläche (6) der so erzeugten Schicht (5) eine Schicht (7) aus Titan aufgetragen wird.

2. Verfahren nach Anspruch 1, **dadurch gekennzeichnet, dass** die Schicht (7) aus Titan mittels einer Plasma-Spraytechnik aufgetragen wird.

3. Verfahren nach Anspruch 1, **dadurch gekennzeichnet, dass** die Schicht (7) aus Titan mittels einer chemischen Gasphasenabscheidung (CVD) aufgetragen wird.

4. Verfahren nach einem der Ansprüche 1 bis 3, **dadurch gekennzeichnet, dass** auf die Schicht (7) aus Titan eine Calciumphosphatschicht aufgetragen wird.

5. Verfahren nach einem der Ansprüche 1 bis 4, **dadurch gekennzeichnet, dass** die strukturierte Oberfläche eine Rauheit von Rz ≥ 20 µm aufweist und die Beschichtung fest mit dem Grundmaterial verbunden ist.

## Claims

1. A method for conditioning at least one subarea of the surface of a dental implant made of a ceramic material, in particular a zirconium dioxide or one of its variants, the outside surface of which is designed for anchoring in the jawbone, using abrasive and/or subtractive processing, in which a thin layer of a silicatic glass ceramic, which is applied to the subarea of the surface of the implant to be conditioned, is solidified by firing the ceramic and is then processed by using an abrasive and/or subtractive process and thereby functionalized, **characterized in that**
a layer (7) of titanium is applied to the surface (6) of the layer (5) produced in this way.

2. The method according to claim 1,
**characterized in that**
the layer (7) of titanium is applied by means of a plasma spray technique.

3. The method according to claim 1,
**characterized in that**
the layer (7) of titanium is applied by means of chemical vapor phase deposition (CVD).

4. The method according to any one of claims 1 to 3, **characterized in that**
a calcium phosphate layer is applied to the layer (7) made of titanium.

5. The method according to any one of claims 1 to 4, **characterized in that**
the structured surface has a roughness of Rz ≥ 20 µm, and the coating is tightly bonded to the base material.

## Revendications

1. Procédé de conditionnement d'au moins une partie de la surface d'un implant dentaire en matériau céramique, en particulier en dioxyde de zirconium ou une de ses variantes, dont la face extérieure est conçue pour s'ancrer dans l'os maxillaire, en employant un traitement abrasif et/ou soustractif, dans lequel est appliquée sur la partie à conditionner de la surface de l'implant, une fine couche d'une céramique de verre silicatique, laquelle est solidifiée dans un feu céramique, et est ensuite traitée de façon abrasive et/ou soustractive et fonctionnalisée, **caractérisé en ce qu'**une couche (7) de titane est appliquée sur la surface (6) de la couche (5) ainsi produite.

2. Procédé selon la revendication 1, **caractérisé en ce que** la couche (7) de titane est appliquée au moyen d'une technique de pulvérisation plasma.

3. Procédé selon la revendication 1, **caractérisé en ce que** la couche (7) de titane est appliquée au moyen d'un dépôt chimique en phase gazeuse (CVD).

4. Procédé selon l'une des revendications 1 à 3, **caractérisé en ce qu'**une couche de phosphate de calcium est appliquée sur la couche (7) de titane.

5. Procédé selon l'une des revendications 1 à 4, **caractérisé en ce que** la surface structurée présente une rugosité de Rz ≥ 20 µm et le revêtement est lié fixement au matériau de base.
